# EUROPÄISCHE PATENTSCHRIFT

(11) **EP 1 159 517 B1**
(45) Veröffentlichungstag und Bekanntmachung des Hinweises auf die Patenterteilung: **01.06.2005**
(21) Anmeldenummer: 00990574.6
(22) Anmeldetag: 22.12.2000
(51) Int. Cl.: F01N 11/00

(54) **VERFAHREN ZUM BETREIBEN EINES KATALYSATORS EINER BRENNKRAFTMASCHINE**
METHOD FOR OPERATING THE CATALYST OF AN INTERNAL COMBUSTION ENGINE
PROCEDE PERMETTANT LE FONCTIONNEMENT D'UN CATALYSEUR SUR UN MOTEUR A COMBUSTION INTERNE

(30) Priorität: 31.12.1999 DE 19963901
(43) Veröffentlichungstag der Anmeldung: 05.12.2001
(73) Patentinhaber: ROBERT BOSCH GMBH, 70442 Stuttgart (DE)
(72) Erfinder: SCHNAIBEL, Eberhard, 71282 Hemmingen (DE); KORING, Andreas, 71636 Ludwigsburg (DE); BELLMANN, Holger, 71636 Ludwigsburg (DE); WAHL, Thomas, 75172 Pforzheim (DE); BLUMENSTOCK, Andreas, 71638 Ludwigsburg (DE); WINKLER, Klaus, 71277 Rutesheim (DE); STANGLMEIER, Frank, 71696 Möglingen (DE); SCHUMANN, Bernd, 71277 Rutesheim (DE)
(86) Internationale Anmeldenummer: PCT/DE2000/004615
(87) Internationale Veröffentlichungsnummer: WO 2001/049995

(56) Entgegenhaltungen:
- EP-A- 0 916 941
- EP-A- 0 936 349
- DE-A- 19 823 923
- DE-A- 19 918 875

## Beschreibung

### Stand der Technik

Die Erfindung betrifft ein Verfahren zum Betreiben eines Katalysators einer Brennkraftmaschine insbesondere eines Kraftfahrzeugs, bei dem der Katalysator mit Stickoxiden beund entladen wird, und bei dem NOx-Emissionen nach dem Katalysator gemessen werden. Ebenfalls betrifft die Erfindung ein Steuergerät für eine Brennkraftmaschine insbesondere eines Kraftfahrzeugs sowie eine Brennkraftmaschine insbesondere für ein Kraftfahrzeug.

Ein derartiges Verfahren, ein derartiges Steuergerät und eine derartige Brennkraftmaschine sind aus der DE 198 23 923 A bekannt. Dort ist eine Brennkraftmaschine beschrieben, bei der der Kraftstoff in einem Homogenbetrieb oder in einem Schichtbetrieb in den Brennraum der Brennkraftmaschine zugeführt wird. Der Homogenbetrieb ist vorzugsweise für den Vollastbetrieb der Brennkraftmaschine vorgesehen, während der Schichtbetrieb für den Leerlauf- und Teillastbetrieb geeignet ist. Beispielsweise in Abhängigkeit von dem angeforderten Drehmoment wird bei einer derartigen Brennkraftmaschine zwischen den genannten Betriebsarten umgeschaltet.

Insbesondere zur Ausführung des Schichtbetriebs ist es erforderlich, daß ein Speicherkatalysator vorhanden ist, mit dem entstehende Stickoxide zwischengespeichert werden können, um sie während eines nachfolgenden Homogenbetriebs zu reduzieren. Dieser Speicherkatalysator wird im Schichtbetrieb mit den Stickoxiden beladen und im Homogenbetrieb wieder entladen. Zur Steuerung und Überwachung ist dem Katalysator ein NOx-Sensor nachgeordnet, der zur Messung von NOx-Emissionen des austretenden Abgases vorgesehen ist.

Aufgrund der Alterung des Katalysators oder aus sonstigen Gründen können Teile des Katalysators defekt werden.

### Aufgabe und Vorteile der Erfindung

Aufgabe der Erfindung ist es, ein Verfahren zum Betreiben eines Katalysators einer Brennkraftmaschine zu schaffen, mit dem ein Defekt des Katalysators erkannt werden kann.

Diese Aufgabe wird bei einem Verfahren der eingangs genannten Art erfindungsgemäß dadurch gelöst, daß der Katalysator nur teilweise beladen wird, daß eine erhöhte NOx-Emission vor oder in dem Katalysator erzeugt wird, und daß aus den danach gemessenen NOx-Emissionen auf die Funktionsfähigkeit des Katalysators geschlossen wird. Bei einem Steuergerät und einer Brennkraftmaschine der jeweils eingangs genannten Art wird die Aufgabe entsprechend gelöst.

Durch die nur teilweise Beladung des Katalysators kann dieser die vor oder in demselben erzeugte erhöhte NOx-Emission vermindern. Damit liegt am Ausgang des Katalysators eine geringere NOx-Emission vor als die anfangs erzeugte erhöhte NOx-Emission. Aus dieser Verminderung wird erfindungsgemäß auf die Funktionsfähigkeit des Katalysators geschlossen. Liegt eine wesentliche Verminderung der anfänglichen erhöhten. NOx-Emission vor, so kann zumindest insoweit auf eine ordnungsgemäße Funktion des Katalysators geschlossen werden.

Der Katalysator wird jedoch als defekt erkannt, wenn eine erhöhte NOx-Emission gemessen wird. In diesem Fall wurde die anfängliche erhöhte NOx-Emission von dem Katalysator nicht vermindert. Dies stellt eine nicht ordnungsgemäße Funktion desselben dar.

Bei einer vorteilhaften Weiterbildung der Erfindung wird die erhöhte NOx-Emission vor oder in dem Katalysator durch ein Entladen desselben erzeugt. Durch das Umschalten zum Entladen entsteht eine erhöhte NOx-Emission. Da der Katalysator nicht vollständig beladen ist, entsteht diese erhöhte NOx-Emission "am Anfang" oder zumindest "im Innern" des Katalysators. Damit kann die erhöhte NOx-Emission bei intaktem Katalysator noch innerhalb desselben wieder vermindert werden. Am Ausgang des Katalysators wird dann keine oder nur noch eine sehr geringe NOx-Emission von dem NOx-Sensor gemessen, woraus auf eine ordnungsgemäße Funktion des Katalysators geschlossen werden kann.

Ebenfalls ist es vorteilhaft, wenn die erhöhte NOx-Emission vor oder in dem Katalysator durch eine Absenkung der Abgasrückführrate und/oder durch eine Frühverstellung des Zündzeitpunkts und/oder durch eine Absenkung des Kraftstoffdrucks erzeugt wird. Alternativ oder additiv kann die erhöhte NOx-Emission durch chemische NOx-Quellen erzeugt werden, bei denen z.B. Harnstoff oder Nitrat vor dem Katalysator eingebracht wird. Weiterhin kann die erhöhte NOx-Emission durch eine vor dem Katalysator angeordnete Zündkerze erzeugt werden.

Von besonderer Bedeutung ist die Realisierung des erfindungsgemäßen Verfahrens in der Form eines Steuerelements, das für ein Steuergerät einer Brennkraftmaschine, insbesondere eines Kraftfahrzeugs, vorgesehen ist. Dabei ist auf dem Steuerelement ein Programm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Steuerelement abgespeichertes Programm realisiert, so daß dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory oder ein Flash-Memory.

weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

### Ausführungsbeispiele der Erfindung

- Figur 1: zeigt eine schematische Darstellung eines Ausführungsbeispiels einer erfindungsgemäßen Brennkraftmaschine,
- Figur 2: zeigt ein schematisches Schaubild der NOx-Emissionen am Ausgang des Katalysators der Brennkraftmaschine der Figur 1, und
- Figuren 3a und 3b: zeigen schematische Schaubilder des Füllzustands und der NOx-Emissionen des Katalysators der Figur 1.

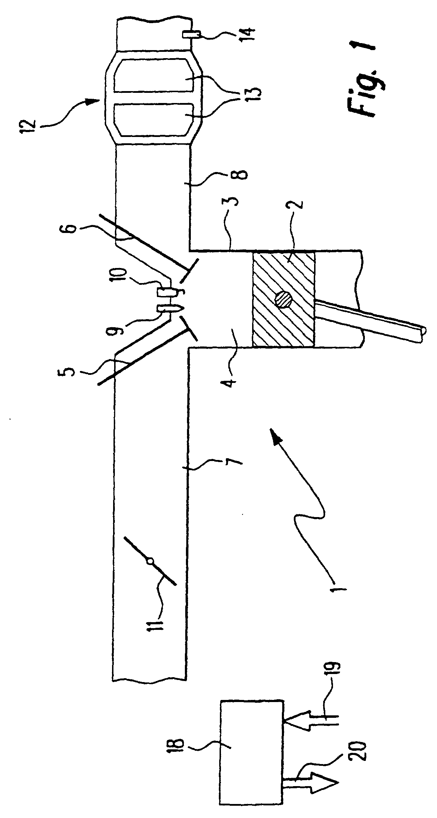

In der Figur 1 ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein Einlaßventil 5 und ein Auslaßventil 6 begrenzt ist. Mit dem Einlaßventil 5 ist ein Ansaugrohr 7 und mit dem Auslaßventil 6 ist ein Abgasrohr 8 gekoppelt.

Im Bereich des Einlaßventils 5 und des Auslaßventils 6 ragen ein Einspritzventil 9 und eine Zündkerze 10 in den Brennraum 4. Über das Einspritzventil 9 kann Kraftstoff in den Brennraum 4 eingespritzt werden. Mit der Zündkerze 10 kann der Kraftstoff in dem Brennraum 4 entzündet werden.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. In dem Abgasrohr 8 ist ein Katalysator 12 untergebracht, der der Reinigung der durch die Verbrennung des Kraftstoffs entstehenden Abgase dient.

Bei dem Katalysator 12 handelt es sich um einen Speicherkatalysator, der mit einem Dreiwegekatalysator kombiniert ist. Der Katalysator 12 ist damit unter anderem dazu vorgesehen, Stickoxide (NOx) zwischenzuspeichern.

Der Katalysator 12 ist entsprechend der Figur 1 aus zwei Trägern 13 für die katalytische Beschichtung, sogenannten Bricks, aufgebaut. In dem dem Katalysator 12 unmittelbar nachgeordneten Abgasrohr ist ein NOx-Sensor 14 vorgesehen, mit dem die NOx-Emissionen in dem aus dem Katalysator 12 ausströmenden Abgas gemessen werden.

Ein Steuergerät 18 ist von Eingangssignalen 19 beaufschlagt, die mittels Sensoren gemessene Betriebsgrößen der Brennkraftmaschine 1 darstellen. Das Steuergerät 18 erzeugt Ausgangssignale 20, mit denen über Aktoren bzw. Steller das Verhalten der Brennkraftmaschine 1 beeinflußt werden kann. Unter anderem ist das Steuergerät 18 dazu vorgesehen, die Betriebsgrößen der Brennkraftmaschine 1 zu steuern und/oder zu regeln. Zu diesem Zweck ist das Steuergerät 18 mit einem Mikroprozessor versehen, der in einem Speichermedium, insbesondere in einem Flash-Memory ein Programm abgespeichert hat, das dazu geeignet ist, die genannte Steuerung und/oder Regelung durchzuführen.

In einer ersten Betriebsart, einem sogenannten Homogenbetrieb der Brennkraftmaschine 1, wird die Drosselklappe 11 in Abhängigkeit von dem erwünschten Drehmoment teilweise geöffnet bzw. geschlossen. Der Kraftstoff wird von dem Einspritzventil 9 während einer durch den Kolben 2 hervorgerufenen Ansaugphase in den Brennraum 4 eingespritzt. Durch die gleichzeitig über die Drosselklappe 11 angesaugte Luft wird der eingespritzte Kraftstoff verwirbelt und damit in dem Brennraum 4 im wesentlichen gleichmäßig verteilt. Danach wird das Kraftstoff/Luft-Gemisch während der Verdichtungsphase verdichtet, um dann von der Zündkerze 10 entzündet zu werden. Durch die Ausdehnung des entzündeten Kraftstoffs wird der Kolben 2 angetrieben. Das entstehende Drehmoment hängt im Homogenbetrieb unter anderem von der Stellung der Drosselklappe 11 ab. Im Hinblick auf eine geringe Schadstoffentwicklung wird das Kraftstoff/Luft-Gemisch möglichst auf Lambda gleich Eins eingestellt.

In einer zweiten Betriebsart, einem sogenannten Schichtbetrieb der Brennkraftmaschine 1, wird die Drosselklappe 11 weit geöffnet. Der Kraftstoff wird von dem Einspritzventil 9 während einer durch den Kolben 2 hervorgerufenen Verdichtungsphase in den Brennraum 4 eingespritzt, und zwar örtlich in die unmittelbare Umgebung der Zündkerze 10 sowie zeitlich in geeignetem Abstand vor dem Zündzeitpunkt. Dann wird mit Hilfe der Zündkerze 10 der Kraftstoff entzündet, so daß der Kolben 2 in der nunmehr folgenden Arbeitsphase durch die Ausdehnung des entzündeten Kraftstoffs angetrieben wird. Das entstehende Drehmoment hängt im Schichtbetrieb weitgehend von der eingespritzten Kraftstoffmasse ab. Im wesentlichen ist der Schichtbetrieb für den Leerlaufbetrieb und den Teillastbetrieb der Brennkraftmaschine 1 vorgesehen.

Der Speicherkatalysator des Katalysators 12 wird während des Schichtbetriebs mit Stickoxiden beladen. In einem nachfolgenden Homogenbetrieb wird der Speicherkatalysator wieder entladen und die Stickoxide werden von dem Dreiwegekatalysator reduziert. Der Speicherkatalysator nimmt während seiner fortlaufenden Be- und Entladung mit Stickoxiden mit der Zeit Schwefel auf. Dies führt zu einer Einschränkung der Speicherfähigkeit des Katalysators, die nachfolgend als Alterung bezeichnet wird.

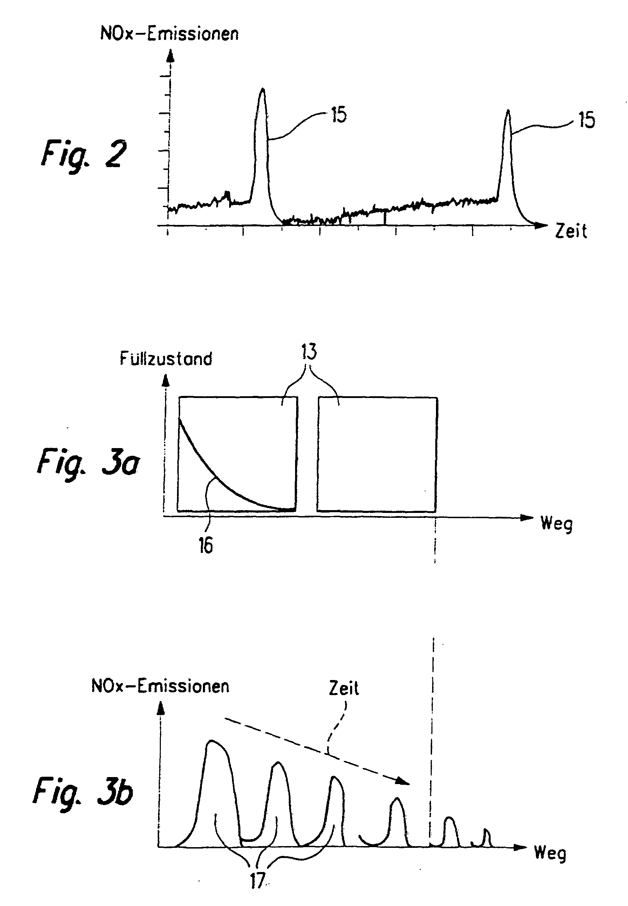

In der Figur 2 sind die NOx-Emissionen über der Zeit aufgetragen, wie sie beispielsweise von dem NOx-Sensor 14 am Ausgang des Katalysators 12 gemessen werden. Die NOx-Emissionen nehmen mit zunehmender Beladung des Speicherkatalysators ebenfalls zu. Bei Erreichen eines vorgegebenen Schwellwerts, bei dem der Speicherkatalysator voll beladen ist, wird die Betriebsart der Brennkraftmaschine 1 umgeschaltet und der Speicherkatalysator wird, wie bereits erwähnt wurde, z.B. im Homogenbetrieb wieder entladen.

Unmittelbar nach dem Umschalten der Brennkraftmaschine 1 in den Homogenbetrieb tritt eine erhöhte NOx-Emission auf. Dies ist in der Figur 2 mit dem Bezugszeichen 15 gekennzeichnet. Diese erhöhte NOx-Emission 15 entsteht dadurch, daß einerseits der Speicherkatalysator aufgrund des Homogenbetriebs die gespeicherten Stickoxide wieder abgibt, daß andererseits der Dreiwegekatalystor noch nicht in der Lage ist, die abgegebenen Stickoxide zu Stickstoff und Sauerstoff zu konvertieren. Damit strömen die Stickoxide unverändert aus dem Katalysator 12 heraus und erzeugen die genannte erhöhte NOx-Emission 15.

In der Figur 3a ist eine Kurve 16 des Füllungszustand des Katalysators 12 über dem Weg aufgetragen, den das Abgas in dem Katalysator 12 durch die beiden Träger 13 hindurch zurücklegt. Aus der Kurve 16 des Füllungszustands ist zu entnehmen, daß im wesentlichen nur der in Abgasrichtung erste der beiden Träger 13 des Katalysators 12 mit Stickoxiden teilweise beladen ist, während der zweite Träger 13 entladen ist.

Wenn der Katalysator 12 einen Zustand aufweist, der der Kurve 16 des Füllungszustands der Figur 3a entspricht, wird von dem Steuergerät 18 ein Übergang in den Homogenbetrieb durchgeführt. Es wird also von dem Steuergerät 18 ein Entladen des Speicherkatalysators veranlaßt, obwohl derselbe gemäß der Kurve 16 noch gar nicht voll beladen ist.

Bei voll beladenem Speicherkatalysator hätte die Umschaltung zur Folge, daß eine erhöhte NOx-Emission am Ausgang des Katalysators 12 gemessen werden würde, wie dies in der Figur 2 dargestellt ist. Da jedoch der Speicherkatalysator entsprechend der Figur 3a nicht voll beladen ist, entsteht diese erhöhte NOx-Emission nicht am Ausgang des Katalysators 12, sondern im wesentlichen nur "am Anfang" bzw. "im Innern" des Katalysators 12. Dies ergibt sich daraus, daß der Speicherkatalysator gemäß der Figur 3a nur "am Anfang" stark beladen ist.

In der Figur 3b sind die erhöhten NOx-Emissionen einerseits über dem Weg aufgetragen, den das Abgas in dem Katalysator 12 zurücklegt, sowie andererseits über der Zeit, den die erhöhten NOx-Emissionen benötigen, um den Weg durch den Katalysator 12 zurückzulegen.

Wie der Figur 3b zu entnehmen ist, und wie bereits erwähnt wurde, ist die erhöhte NOx-Emission "am Anfang" des Katalysators 12 relativ groß. Diese große erhöhte NOx-Emission durchläuft den Katalysator 12 in Richtung zu seinem Ausgang. Auf diesem Weg wird die erhöhte NOx-Emission von dem Dreiwegekatalysator zumindest teilweise in Stickstoff und Sauerstoff konvertiert. Dies führt dazu, daß mit der Zeit und entlang des Abgaswegs die anfangs relativ große erhöhte NOx-Emission langsam geringer wird. Dies ist in der Figur 3b anhand der aufeinanderfolgenden, immer kleiner werdenden erhöhten NOx-Emissionen 17 dargestellt.

Am Ausgang des Katalysators 12, der in den Figuren 3a und 3b durch eine gestrichelte Linie dargestellt ist, verläßt somit eine relativ kleine erhöhte NOx-Emission den Katalysator 12. Diese relativ kleine erhöhte NOx-Emission geht bei einer entsprechenden Wahl der Kurve 16 des Füllungszustands nahezu gegen Null.

Wenn beide Träger 13 des Katalysators 12 in Ordnung sind, so wird, wie beschrieben, von dem NOx-Sensor 14 am Ausgang des Katalysators 12 keine oder zumindest nahezu keine erhöhte NOx-Emission mehr gemessen. Daraus kann das Steuergerät 18 auf die ordnungsgemäße Funktion beider Träger 13 des Katalysators 12 schließen.

Ist jedoch der in Abgasrichtung erste Träger 13 des Katalysators 12 defekt, der zweite Träger 13 aber in Ordnung, so entsteht die erhöhte NOx-Emission erst "am Anfang" des zweiten Trägers 13 und kann dann innerhalb des zweiten Trägers 13 nicht mehr vollständig gegen Null reduziert werden. Es wird in diesem Fall somit am Ausgang des Katalysators 12 eine erhöhte NOx-Emission von dem NOx-Sensor 14 gemessen, aus der das Steuergerät 18 auf den Defekt zumindest eines der beiden Träger 13 des Katalysators 12 schließen kann.

Entsprechendes gilt, wenn der erste Träger 13 zwar in Ordnung, jedoch der zweite Träger 13 defekt ist. In diesem Fall entsteht die erhöhte NOx-Emission zwar "am Anfang" des ersten Trägers 13, kann aber ohne den zweiten Träger 13 nicht vollständig gegen Null reduziert werden. Es wird in diesem Fall somit am Ausgang des Katalysators 12 eine erhöhte NOx-Emission von dem NOx-Sensor 14 gemessen, aus der das Steuergerät 18 auf den Defekt zumindest eines der beiden Träger 13 des Katalysators 12 schließen kann.

Sind beide Träger 13 des Katalysators 12 defekt, so kann von dem NOx-Sensor 14 nichts gemessen werden, da in dem Speicherkatalysator kein Stickoxid eingespeichert war und damit auch keine erhöhte NOx-Emission entstehen kann. Dieser Fall kann von dem zuerst erläuterten Fall, bei dem beide Träger 13 des Katalysators 12 in Ordnung sind, zumindest insoweit nicht unterschieden werden. Für diese Unterscheidung sind andere Verfahren anzuwenden, die hier nicht beschrieben sind.

Wird somit, ausgehend von einem Füllungszustand gemäß der Figur 3a und nach einem Umschalten in den Homogenbetrieb, eine erhöhte NOx-Emission von dem NOx-Sensor 14 gemessen, so kann daraus von dem Steuergerät 18 auf einen Defekt zumindest eines Trägers 13 des Katalysators 12 geschlossen werden.

Zur Erkennung der erhöhten NOx-Emission kann von dem Steuergerät 18 der Maximalwert der von dem NOx-Sensor 14 gemessenen NOx-Emissionen und/oder die Fläche unter diesen NOx-Emissionen und/oder vorhandene Zeitkonstanten dieser NOx-Emissionen oder dergleichen herangezogen werden.

Es versteht sich, daß das vorstehend beschriebene Verfahren auch auf einen Katalysator 12 angewendet werden kann, der nur einen einzigen Träger 13 für die katalytische Beschichtung aufweist. In diesem Fall kann aufgrund einer erhöhten NOx-Emission auf einen Defekt zumindest eines Teils dieses Katalysators 12 geschlossen werden.

Bei dem beschriebenen Verfahren wird die erhöhte NOx-Emission 15 der Figur 2 durch ein Umschalten in den Homogenbetrieb erzeugt. Es ist ebenfalls möglich, eine erhöhte NOx-Emission auch andersartig zu erzeugen. So kann eine erhöhte NOx-Emission durch ein Absenken der Abgasrückführrate und/oder durch eine Frühverstellung des Zündzeitpunkts und/oder durch eine Absenkung des Kraftstoffdrucks erzeugt werden. Ebenfalls kann eine erhöhte NOx-Emission durch chemische NOx-Quellen erzeugt werden, bei denen z.B. Harnstoff oder Nitrat vor dem Katalysator 12 eingebracht wird. Ebenfalls kann eine erhöhte NOx-Emission dadurch erzeugt werden, daß eine vor dem Katalysator 12 angeordnete Zündkerze entsprechend angesteuert wird.

## Patentansprüche

1. Verfahren zum Betreiben eines Katalysators (12) einer Brennkraftmaschine (1) insbesondere eines Kraftfahrzeugs, bei dem der Katalysator (12) mit Stickoxiden be- und entladen wird, und bei dem NOx-Emissionen nach dem Katalysator (12) gemessen werden, **dadurch gekennzeichnet, daß** der Katalysator (12) nur teilweise beladen wird (Figur 3a), daß eine erhöhte NOx-Emission (Figur 3b) vor oder in dem Katalysator (12) erzeugt wird, und daß aus den danach gemessenen NOx-Emissionen auf die Funktionsfähigkeit des Katalysators (12) geschlossen wird.

2. Verfahren nach Anspruch 1, **dadurch gekennzeichnet, daß** der Katalysator (12) als defekt erkannt wird, wenn eine erhöhte NOx-Emission gemessen wird.

3. Verfahren nach einem der Ansprüche 1 oder 2, **dadurch gekennzeichnet, daß** die erhöhte NOx-Emission vor oder in dem Katalysator (12) durch ein Entladen desselben erzeugt wird (Figur 2).

4. Verfahren nach einem der Ansprüche 1 bis 3, **dadurch gekennzeichnet, daß** die erhöhte NOx-Emission vor oder in dem Katalysator (12) durch eine Absenkung der Abgasrückführrate und/oder durch eine Frühverstellung des Zündzeitpunkts und/oder durch eine Absenkung des Kraftstoffdrucks erzeugt wird.

5. Verfahren nach einem der Ansprüche 1 bis 4, **dadurch gekennzeichnet, daß** die erhöhte NOx-Emission durch chemische NOx-Quellen erzeugt werden, bei denen z.B. Harnstoff oder Nitrat vor dem Katalysator (12) eingebracht wird.

6. Verfahren nach einem der Ansprüche 1 bis 5, **dadurch gekennzeichnet, daß** die erhöhte NOx-Emission durch eine vor dem Katalysator (12) angeordnete Zündkerze erzeugt wird.

7. Steuerelement, insbesondere Flash-Memory, für ein Steuergerät (18) einer Brennkraftmaschine (1) insbesondere eines Kraftfahrzeugs, auf dem ein Programm abgespeichert ist, das auf einem Rechengerät, insbesondere auf einem Mikroprozessor, ablauffähig und zur Anwendung bei einem Verfahren nach einem der Ansprüche 1 bis 6 geeignet ist.

8. Steuergerät (18) für eine Brennkraftmaschine (1) insbesondere eines Kraftfahrzeugs, wobei die Brennkraftmaschine (1) einen Katalysator (12) aufweist, der mit Stickoxiden be- und entladen werden kann, und wobei die Brennkraftmaschine (1) einen NOx-Sensor (14) aufweist, mit dem NOx-Emissionen nach dem Katalysator (12) gemessen werden können, **dadurch gekennzeichnet, dass** durch das Steuergerät (18) der Katalysator (12) nur teilweise beladen wird (Figur 3a), dass durch das Steuergerät (18) eine erhöhte NOx-Emission (Figur 3b) vor oder in dem Katalysator (12) erzeugt wird, und dass von dem Steuergerät (18) aus den danach gemessenen NOx-Emissionen auf die Funktionsfähigkeit des Katalysators (12) geschlossen wird.

9. Brennkraftmaschine (1) insbesondere für ein Kraftfahrzeug mit einem Katalysator (12), der mit Stickoxiden be- und entladen werden kann, mit einem NOx-Sensor (14), mit dem NOx-Emissionen nach dem Katalysator (12) gemessen werden können, und mit einem Steuergerät (18), **dadurch gekennzeichnet, dass** durch das Steuergerät (18) der Katalysator (12) nur teilweise beladen wird (Figur 3a), dass durch das Steuergerät (18) eine erhöhte NOx-Emission (Figur 3b) vor oder in dem Katalysator (12) erzeugt wird, und dass von dem Steuergerät (18) aus den danach gemessenen NOx-Emissionen auf die Funktionsfähigkeit des Katalysators (12) geschlossen wird.

## Claims

1. Method for operating a catalytic converter (12) of an internal combustion engine (1), in particular in a motor vehicle, in which the catalytic converter (12) is loaded with nitrogen oxides, and this load is then lowered again, and in which NOx emissions downstream of the catalytic converter (12) are measured, **characterized in that** the catalytic converter (12) is only partially loaded (Figure 3a), **in that** increased NOx emission (Figure 3b) is generated upstream of or in the catalytic converter (12), and **in that** conclusions are drawn as to the ability of the catalytic converter (12) to function from the NOx emissions which are then measured.

2. Method according to Claim 1, **characterized in that** the catalytic converter (12) is found to be defective if increased NOx emission is measured.

3. Method according to Claim 1 or 2, **characterized in that** the increased NOx emission upstream of or in the catalytic converter (12) is produced by lowering the loading of the catalytic converter (Figure 2).

4. Method according to one of Claims 1 to 3, **characterized in that** increased NOx emission upstream of or in the catalytic converter (12) is produced by reducing the exhaust-gas recirculation rate and/or shifting the ignition instant to an earlier position and/or by lowering the fuel pressure.

5. Method according to one of Claims 1 to 4, **characterized in that** the increased NOx emission is produced by chemical NOx sources, in which, for example, urea or nitrate is introduced upstream of the catalytic converter (12).

6. Method according to one of Claims 1 to 5, **characterized in that** the increased NOx emission is produced by a spark plug arranged upstream of the catalytic converter (12).

7. Control element, in particular flash memory, for a control unit (18) of an internal combustion engine (1), in particular in a motor vehicle, on which control element a program which can run on a computer unit, in particular on a microprocessor, and is suitable for use in a method according to one of Claims 1 to 6 is stored.

8. Control unit (18) for an internal combustion engine (1), in particular of a motor vehicle, the internal combustion engine (1) having a catalytic converter (12) which can be loaded with nitrogen oxides and this load can then be lowered again, and the internal combustion engine (1) having an NOx sensor (14), which can be used to measure NOx emissions downstream of the catalytic converter (12), **characterized in that** the control unit (18) only partially loads the catalytic converter (12) (Figure 3a), **in that** the control unit (18) generates increased NOx emission (Figure 3b) upstream of or in the catalytic converter (12), and **in that** the control unit (18) draws conclusions as to the ability of the catalytic converter (12) to function from the NOx emissions which are then measured.

9. Internal combustion engine (1), in particular for a motor vehicle, having a catalytic converter (12) which can be loaded with nitrogen oxides and this load can then be lowered again, having an NOx sensor (14), which can be used to measure NOx emissions downstream of the catalytic converter (12), and having a control unit (18), **characterized in that** the control unit (18) only partially loads the catalytic converter (12) (Figure 3a), **in that** the control unit (18) generates increased NOx emission (Figure 3b) upstream of or in the catalytic converter (12), and **in that** the control unit (18) draws conclusions as to the ability of the catalytic converter (12) to function from the NOx emissions which are then measured.

## Revendications

1. Procédé de gestion d'un catalyseur (12) d'un moteur à combustion interne (1), notamment d'un véhicule automobile, selon lequel le catalyseur (12) se charge et se décharge d'oxydes d'azote et selon lequel on mesure les émissions d'oxydes NOx en aval du catalyseur (12),
**caractérisé en ce qu'**
on ne charge que partiellement le catalyseur (12) (figure 3a),
on génère une émission augmentée d'oxydes NOx (figure 3b), en amont ou dans le catalyseur (12) et
à partir des émissions d'oxydes NOx, mesurées ensuite, on juge l'aptitude au fonctionnement du catalyseur (12).

2. Procédé selon la revendication 1,
**caractérisé en ce qu'**
on estime que le catalyseur (12) est défectueux si l'on mesure une augmentation de l'émission des oxydes NOx.

3. Procédé selon l'une des revendications 1 ou 2,
**caractérisé en ce qu'**
on génère l'augmentation de l'émission d'oxydes NOx en amont ou dans le catalyseur (12) en déchargeant celui-ci (figure 2).

4. Procédé selon l'une des revendications 1 à 3,
**caractérisé en ce qu'**
on génère une augmentation de l'émission d'oxydes NOx en amont ou dans le catalyseur (12) par un abaissement du taux de réintroduction des gaz d'échappement et/ou par un réglage dans le sens de l'avance de l'instant d'allumage et/ou par un abaissement de la pression du carburant.

5. Procédé selon l'une des revendications 1 à 4,
**caractérisé en ce qu'**
on génère l'augmentation de l'émission d'oxydes NOx par des sources chimiques d'oxydes NOx introduisant par exemple de l'urée ou un nitrate en amont du catalyseur (12).

6. Procédé selon l'une des revendications 1 à 5,
**caractérisé en ce qu'**
on génère l'augmentation de l'émission d'oxydes NOx par une bougie installée en amont du catalyseur (12).

7. Elément de commande, notamment mémoire-flash pour un appareil de commande (18) d'un moteur à combustion interne (1), notamment d'un véhicule automobile sur lequel est enregistré un programme qui peut être exécuté par un calculateur, notamment par un microprocesseur, pour l'application d'un procédé selon l'une des revendications 1 à 6.

8. Appareil de commande (18) d'un moteur à combustion interne (1). notamment d'un véhicule automobile, dont
le moteur à combustion interne (1) comporte un catalyseur (12) qui peut se charger et se décharger d'oxydes d'azote et comporte un capteur d'oxydes NOx (14) permettant de mesurer les émissions d'oxydes NOx en aval du catalyseur (12),
**caractérisé en ce que**
l'appareil de commande (18) ne charge que partiellement le catalyseur (12) (figure 3a),
l'appareil de commande (18) génère une augmentation de l'émission des oxydes NOx (figure 3b) en amont ou dans le catalyseur (12) et
à partir des émissions d'oxydes NOx mesurées ensuite, l'appareil de commande (18) juge l'aptitude au fonctionnement du catalyseur (12).

9. Moteur à combustion interne (1), notamment pour un véhicule automobile, comportant un catalyseur (12) qui peut se charger et se décharger d'oxydes d'azote, comportant un capteur d'oxydes NOx (14), mesurant les émissions d'oxydes NOx en aval du catalyseur (12) et un appareil de commande (18).
**caractérisé en ce que**
l'appareil de commande (18) ne charge que partiellement le catalyseur (12) (figure 3a),
l'appareil de commande (18) génère une augmentation de l'émission d'oxydes NOx (figure 3b) en amont ou dans le catalyseur (12), et
les émissions d'oxydes NOx mesurées ensuite par l'appareil de commande (18) lui permettent de juger de l'aptitude au fonctionnement du catalyseur (12).
